# EUROPEAN PATENT SPECIFICATION

(11) **EP 4 672 975 B1**
(45) Date of publication and mention of the grant of the patent: **25.11.2026**
(21) Application number: 24707550.0
(22) Date of filing: 01.03.2024
(51) Int. Cl.: A23G 3/54, A23G 1/54, A23G 3/44

(54) **AERATED CONFECTIONERY**
GESCHÄUMTE SÜSSWARE
CONFISERIE FOISONNEE

(30) Priority: 01.03.2023 EP 23159514
(43) Date of publication of application: 07.01.2026
(73) Proprietor: Société des Produits Nestlé S.A., 1800 Vevey (CH)
(72) Inventor: LAZIDIS, Aristodimos, York Yorkshire YO30 4UH (GB); CROSSLAND, Erin Elizabeth, Leeds Yorkshire LS7 4PJ (GB)
(74) Representative: Slaven, John William
(86) International application number: PCT/EP2024/055315
(87) International publication number: WO 2024/180204

(56) References cited:
- WO-A1-2011/049472
- WO-A1-2023/025934
- CA-A1- 2 346 266
- GB-A- 2 605 842
- US-A1- 2010 143 545
- US-A1- 2019 289 873
- US-A1- 2020 000 116

## Description

### Field of the Invention

This invention relates to a water-based aerated confectionery product and methods of making the same. In particular, the invention relates to stable aqueous mousses comprising aggregated protein and sugar.

### Background of the Invention

Aerated confectionery products are made in both artisanal and industrial processes.

In chocolate confectionery the format, production method and distribution channel require products to be microbiologically stable in ambient conditions for typically 9 to 12 months. This is practically achieved by ensuring that the water activity of the product is low enough to prevent the proliferation of pathogenic bacteria, yeasts and moulds. The upper limit of water activity for chocolate products is 0.67. Products with a wafer or biscuit element have lower water activity requirements (typically 0.45) to protect the typical sensory characteristics of elements that are sensitive to moisture.

This low water activity is usually achieved by avoiding the use of water-based systems, which in turn explains the primary use of fat-based fillings in confectionery. Fat based fillings can be successfully aerated, but are perceived as "heavy" and the texture that they provide is far from the mousses, milkshakes and whipped creams that consumers associate with aerated structures. From a nutritional point of view, fat-based fillings also contain saturated fatty acids (SFA) and generally have higher calorific value than sugars, which are the main constituent of water-based systems.

Water-based systems have a lighter and softer perception, are free of SFA and have lower calorific value, but contribute significantly to the sugars of the product. The water activity of these systems is challenging because all of the solids are suspended in water, which although limited, can significantly increase the water activity. This can be addressed either by replacing part of the water with a sugar alcohol that has high humectancy (e.g. sorbitol or glycerol) or by an increase of the solids of the system by adding more sugar. The choice of sugars is important to achieve a system that still flows in a low moisture matrix and room temperature. Also, the sugars in the system should not crystallise over time to an extent that are perceivable by the consumer, since they are in a metastable state at this high total solids content. This technology is known to the art and although the use of sugar alcohols is prevalent, consumers are not entirely comfortable with them on the label, and there is potential for digestive adverse side effects.

The main benefit of water-based confectionery fillings is that they have a softer texture that can be easily modulated with the use of a hydrocolloid. They also deliver very efficiently water-based flavours such as those from fruits, coffee and caramel. Finally, they do not contribute to the fat or SFA content of the product and have a lower price than vegetable fats.

The aeration of water based systems is possible but a surface active species such as a protein or surfactant is required, whereas in fat systems the fat crystals stabilise the gas bubbles. This together with the fact that the viscosity is lower (to gain the advantage of a soft texture) makes it very challenging to provide stable gas bubbles throughout the shelf-life of an aerated water-based product.

WO-A-2014/017525 describes a low-fat or fat-free air bubble-containing emulsion, which contains a whey protein aggregate. Ice creams are described and the overrun (volume increase, or "whippability") stability was measured at -18°C. The pH levels for the protein aggregate solution are 5.5 - 7 (neutral pH).

EP1839495 B1 describes whey protein micelles and their use in protein enriched frozen desserts. The pH of this product is between 5.8-6.6.

WO-A-2018148390A1 describes a shelf-stable mousse mixed with a fat-containing product.

EP-A-3197293 describes whippable food products, whipped food products, and methods of making the same. The whippable food product has less than 5% by weight fat and includes about 0.5% to about 30% by weight of a dietary fibre; about 50% to about 95% by weight of water; up to about 5% by weight of a protein; up to about 5% by weight of a food starch; up to about 5% by weight of an emulsifier; and up to about 5% by weight of a hydrocolloid. US7,700,144 B2 describes high protein aerated food compositions. The compositions comprise hydrocolloids and added fibre.

WO-A-2007/008560 A9 describes stabilized edible foams and formulations for palatable foams with enhanced stability. In certain embodiments, the formulations include a base liquid (such as milk), a surfactant, a polysaccharide, and a polymer capable of molecular interaction with the polysaccharide.

There remains a need for improved foods with textures and appearances that are appealing to consumers while having nutritional benefits and favourable manufacturing and storage characteristics.

### Summary of the Invention

The invention, which is defined by the claims, relates to aqueous aerated confectionery such as mousses and foams that are stabilized against drainage and sugar crystallisation. In particular, the invention relates to aerated aqueous confectionery comprising thermally denatured protein and sugar. The aggregated protein is preferably whey protein. The sugar is preferably a blend of different sugars, more preferably comprising fructose.

The use of thermal denaturing provides advantageous aeration inclusion (i.e. whipping) and aeration stability, preferably without the need for multiple additional stabilisers. Advantageously, the thermal denatured protein of the present invention, in combination with the sugar system, provides a stable composition at the claimed pHs in order to form a more acceptable base composition for the inclusion of flavours and components that do not benefit from an acidic taste profile. For example, the use of the thermally denatured protein affords sufficient stabilisation to work at more neutral pHs that allow the use of flavours such as cocoa and vanilla without impacting the taste profile.

A first aspect of the invention provides a chocolate or chocolate analogue confectionery filled with water-based aerated confectionery filling, wherein said water-based aerated confectionery filling:
has a pH of greater than or equal to 5.6; and has a water activity less than 0.67; and
comprises 30wt% to 90wt% sugar,
wherein at least two sugars are present,
wherein one of the sugars is fructose that forms at least 10wt% of the total sugar content;
comprises between 1wt% to 8wt% protein,
wherein the protein stabilises the water-based aerated confectionery and the protein has been thermally denatured and
the water-based aerated confectionery is partly or completely surrounded or encased in chocolate or chocolate analogue.

The protein is preferably whey protein.

The water activity is preferably above 0.45 and below 0.67, for example 0.5 to 0.6. In some embodiments, the water activity is below 0.64 or below 0.59.

The water-based aerated confectionery filling comprises 30wt% to 90wt% sugar and between 1wt% to 8wt% protein. The protein stabilises the water-based aerated confectionery filling. The water-based aerated confectionery filling is water-based and not fat-based.

The water-based aerated confectionery filling comprises water. This may be present as part of a sugar syrup or other ingredient, and/or as separately added water. Sugar syrup usually contains around 20wt% to 30wt% water or around 20wt% to 25wt% water, for example around 23wt% of the exemplified inverted "IS221" syrup is water.

When separately added, the water is preferably added at between 0.1wt% and 10wt% of the total ingredients, for example 1wt% to 10wt%, 1wt% to 8wt%, 2wt% to 8wt% or 3wt% to 7wt% .

The total water content from all sources is preferably greater than 5wt% and less than 40wt%, more preferably 30wt% or less, for example 10wt% to 30wt%. In some embodiments, the water content is between 10wt% and 20wt%, for example around 14wt%, 15wt% or 16wt%, or such as around 10wt%, 11wt%, 12wt%, 13wt%, 17wt%, 18wt%, 19wt% or 20wt%. In one embodiment, the total water content from all sources is between around 20wt% and 27wt%, for example around 25wt%, or around 21wt%, 22wt%, 23wt%, 24wt%, 26wt% or 27wt%.

In most preferred embodiments, the total water content is from 10wt% to 30wt%, preferably between 12wt% and 27wt% and more preferably between 15wt% and 25wt%.

The wt% water content may be determined by measuring the amount of water in the sample by Karl Fischer titration that is based in the reaction of water with iodine in the presence of sulphur dioxide. The determination involves a known weight of sample to be mixed in a methanol, n-hexane solvent and then titrated with Karl Fischer reagent (which consists of iodine, sulfur dioxide, a base and a solvent, such as alcohol) up to the equivalence point which is detected by voltammetry and the amount of water is defined allowing the calculation of the humidity of the sample.

The aerated confectionery has a water activity below 0.67, preferably above 0.45 and below 0.67. In some embodiments, the water-based aerated confectionery has a water activity of no greater than 0.64, no greater than 0.62, or no greater than 0.59. The water activity is preferably greater than 0.45. The water activity may be between 0.5 and 0.59, for example around 0.54, in some embodiments. Suitable water activities according to the invention include 0.66, 0.65, 0.64, 0.63, 0.62, 0.61, 0.60, 0.59, 0.58, 0.57, 0.56, 0.55, 0.54, 0.53, 0.52, 0.51, 0.50, 0.49, 0.48, 0.47 and 0.46. Preferred water activities include 0.64, 0.63, 0.62, 0.61, 0.60, 0.59, 0.58, 0.57, 0.56, 0.55, 0.54, 0.53, 0.52, 0.51 and 0.50.

The term water activity ("Aw") is well known in the art, and refers to is the partial vapor pressure of water in a solution divided by the standard state partial vapor pressure of water. In the field of food science, the standard state is most often defined as the partial vapor pressure of pure water at the same temperature. Using this particular definition, pure distilled water has a water activity of exactly one. A water activity of 0.80 means the vapor pressure is 80 percent of that of pure water. Water activity values are preferably obtained by either a resistive electrolytic, a capacitance or a dew point hygrometer, as known in the art. Water activity values according to the invention are most preferably determined by enclosing a sample in a sealed container. The relative humidity of the air in the headspace will equilibrate with the water activity of the sample. At equilibrium, the two will be equal, and the relative humidity of the headspace can be measured using an electrical capacitance sensor to determine the water activity of the sample.

The aerated confectionery is preferably a mousse or a foam.

The aerated confectionery has a pH less than 5.5, preferably between 2 and 5.4. In some embodiments, the aerated confectionery has a pH of about 4.2 or less, for example a pH of between 2 and 4.2, a pH of between 2 and 4, a pH of between 2.5 and 4, or a pH between 2.5 and 3.5, for example around pH 3.

In preferred embodiments, the pH is between 5.6 and 10.0, preferably between 6.0 and 8.0, preferably between 6.3 and 7.5, and most preferably between 6.3 and 7.0. As shown in the Examples below, these pH ranges provide the optimum balance between whipping properties and textures (which impacts depositing properties), as well as contributing to the overall taste in a positive manner.

The pH is preferably measured at ambient conditions, preferably at a temperature of 20°C, using equipment known in the art.

The pH of the water-based aerated confectionery compositions of the present invention may be provided by the ingredients per se without the need for additional pH modification. However, if pH lowering is required, a food-grade acid is preferably added to aid pH control. For example, food-grade acids that may be used are preferably selected from the group consisting of acetic acid, citric acid, tartaric acid, malic acid, folic acid, fumaric acid, and lactic acid and mixtures thereof. The acid may be added in any suitable form, e.g. powder. In alternative embodiments, if pH increase is required, a food-grade alkalis, acidity regulators etc. may preferably added to aid pH control.

The protein is thermally denatured and preferably be aggregated. The protein is preferably denatured by heat, for example heating to a temperature 50°C or greater, 60°C or greater, 70°C or greater or 80°C or greater, for example between 50°C and around 100°C, between 60°C and around 95°C, between 70°C and 90°C, for example between 75°C and around 85°C. In preferred embodiments, the thermal denaturing causes the formation of aggregates.

The protein is preferably whey protein. This may conveniently be added in the form of whey protein isolate or whey protein concentrate, which terms are known in the art. Whey protein isolate contains a high proportion of whey protein, preferably around 90wt%, so can conveniently be used. Whey protein concentrate typically contains around 80wt% whey protein and can also be used.

The 1wt% to 8wt% of protein in the confectionery filling of the invention is the wt% of actual protein, not the wt% of the protein concentrate or isolate (which contain up to 20% of other non-protein components) that can be used to provide the protein. For example, when 1wt% protein is required in the confectionery, 1.12wt% of a whey protein isolate comprising 90wt% protein can be used to provide the required 1wt% protein. In another example, when 5wt% protein is required in the confectionery, 6.25wt% of a whey protein concentrate comprising 80wt% protein can be used to provide the required 5wt% protein. When 3.3wt% of whey protein isolate (comprising 90wt% protein) is used as an ingredient, this will provide 2.97wt% protein to the confectionery.

The protein, preferably whey protein, is present at between 1wt% to 8wt% of the confectionery filling. In some embodiments, the protein is present in an amount between 2wt% to 8wt% of the confectionery, or in an amount between 2wt% to 5wt% of the confectionery optionally at least 2wt% or at least 3wt%. Examples of suitable amounts include around 1.5wt%, 2wt%, 2.5wt%, 3wt%, 3,5wt%, 4wt%, 4.5wt%, 5wt%, 5.5wt% and 6wt%, and all ranges between those exemplary amounts. In some embodiments, the protein is present at 2.5wt% to 8wt%, 2.5wt% to 6wt%, or 2.75wt% to 6wt%.

The aerated confectionery filling comprises 30wt% to 90wt% sugar, for example sugar between 40wt% and 90wt%. In some embodiments, the sugar is present at between 40wt% and 80wt%, between 40wt% and 70wt%, between 50wt% and 90wt%, between 50wt% and 90wt%, or between 60wt% and 90wt%. In some embodiments, the sugar is present at between 70wt% and 90wt%, for example between 75wt% and 90wt%, such as between 80wt% and 90wt%.

In some embodiments, the sugar is a sugar syrup. Suitable sugar syrups include glucose syrup preferably at 40 to 70 Dextrose Equivalent ("DE"), fructose glucose syrup (may also be termed glucose fructose syrup, isoglucose or fructose corn syrup), high fructose syrup, corn syrup, oat syrup, rice syrup or tapioca syrup, or a mixture of any two or more of these syrups. Undesirable crystallisation of the sugar in the aerated confectionery filling is shown in the Examples to be reduced or avoided when the sugar comprises or consists of two or more different sugars. According to the present invention, at least two sugars are present, wherein one of the sugars is fructose that forms at least 10wt% of the total sugar content. In one embodiment, the blend of different sugars is provided by an invert sugar with a sugar conversion percentage (i.e. degree of hydrolysis) at least 10% but below 70%, below 60%, below 50% or below 40%. In some embodiments, the sugar is an invert sugar with a sugar conversion percentage (i.e. degree of hydrolysis) of 20% to 60%, 30% to 50% or 40% to 50%. Invert sugars with incomplete conversion (hydrolysis) are known as partial invert sugars.

This mixture of sugars in the confectionery may comprise a mixture of at least one reducing sugar and at least one non-reducing sugar. Sucrose is a non-reducing sugar while dextrose and fructose are reducing sugars. A partial invert syrup comprises sucrose (non-reducing), dextrose (reducing) and fructose (reducing). The sugar in the aerated confectionery preferably comprises at least 10% but less than 70% reducing sugars, with the remainder being non-reducing sugars. In some embodiments, the sugar comprises 10% to 60% reducing sugars, 20% to 60% reducing sugars, or 30% to 50% reducing sugars. The Examples demonstrate the use of a sugar mixture comprising 40wt% to 50wt% (specifically 41wt% to 49wt%) reducing sugars. The mixture of reducing sugar and non-reducing sugar can be provided as a partially-inverted sugar syrup.

A fully hydrolysed (~97% inverted) invert syrup, in which essentially all sucrose is broken down to dextrose and fructose, may crystallise in aerated products. A partially hydrolysed syrup, for example hydrolysis above 10% but below 70%, preferably less than 60% hydrolysed (inverted) is more stable according to the present invention and is resistant to crystallisation.

Invert sugar may be fully inverted sugar syrup or, preferably, partially inverted sugar syrup. Fully inverted sugar syrup comprises only glucose and fructose. Partially-inverted sugar syrup comprises glucose, fructose and sucrose, and is preferred.

In one embodiment, the sugar in the confectionery filling comprises or consists of partially hydrolysed invert syrup. In another embodiment, the sugar comprises or consists of a mix of sucrose, partially or fully-inverted syrup, and glucose. In a further embodiment, the sugar comprises or consists of a mixture of sucrose, fructose and glucose.

Accordingly, a mixture of sugars is preferably used according to the invention.

According to the present invention the sugar mix comprises at least two sugars wherein one of the sugars is fructose that forms at least 10% of the total sugar content. Preferably, between 10wt% and 50wt% of the sugar (i.e. from 1/10 to ½ of the sugars, preferably at least 1/5) is fructose. More preferably, around 15wt% to 40wt%, more preferably 20wt% to 30wt%, for example 20wt% to 25wt% of the sugars are fructose. This can be achieved either by blending different sugar rich ingredients (such as powder sugars, starch derived syrups or inverted sugar syrups) or by using a partially inverted sugar syrup comprising sucrose, dextrose and fructose.

In a preferred embodiment, from 20wt% to 65wt% of the sugar in the aerated confectionery filling is glucose (including dextrose and glucose/dextrose mixtures). More preferably, 25wt% to 65wt%, more preferably 30wt% to 60wt% and more preferably 35wt% to 55wt% of the sugars in the aerated confectionery filling.

Due to the dextrorotatory nature of glucose and dextrose, these can be interchanged freely with each other (i.e. when glucose is used this can be fully or partially substituted with dextrose with no observed change in effect). Hence, preferably in this patent the term "glucose" is to be generally read as encompassing glucose and dextrose and mixtures thereof.

In a preferred embodiment, from 0wt% to 60wt% of the sugar in the aerated confectionery filling is sucrose. More preferably, 0wt% to 55wt%, and 2wt% to 40wt% of the sugars in the aerated confectionery filling. The presence of sucrose is less important than the contributions of the fructose disclosed above.

In a preferred embodiment, from 0wt% to 20wt% of the sugar in the aerated confectionery filling is maltose. More preferably, 0wt% to 15wt% and 2wt% to 12wt% of the sugars in the aerated confectionery filling. The presence of maltose is less important than the contributions of the fructose disclosed above.

In a preferred embodiment, the confectionery comprises a sugar mix in the aerated confectionery filling and the confectionery comprises 0wt% to 30wt% sucrose, 5wt% to 30wt% glucose syrup and 35wt% to 75wt% fructose glucose syrup based on the weight of the composition.

In a preferred embodiment, the aerated confectionery filling comprises a sugar mix and the aerated confectionery filling comprises, based on the weight of the aerated confectionery filling, 0.0wt% to 20wt% sucrose, 5.0wt% to 25wt% glucose syrup and 20wt% to 55wt% fructose glucose syrup.

In a preferred embodiment, the aerated confectionery filling comprises a sugar mix and the aerated confectionery filling comprises, based on the weight of the aerated confectionery filling, 0.0wt% to 15wt% sucrose, 7.5wt% to 20wt% glucose syrup and 25wt% to 50wt% fructose glucose syrup.

In a preferred embodiment, the aerated confectionery filling comprises a sugar mix and the aerated confectionery filling comprises, based on the weight of the aerated confectionery filling, 0.0wt% to 15wt% sucrose, 7.5wt% to 15wt% glucose syrup and 30wt% to 45wt% fructose glucose syrup.

In a preferred embodiment, the aerated confectionery filling comprises a sugar mix and the confectionery comprises 5wt% to 30wt% sucrose, 5wt% to 30wt% glucose syrup and 35wt% to 75wt% fructose glucose syrup.

In a more preferred embodiment, the aerated confectionery filling comprises a sugar mix and the confectionery comprises 10wt% to 25wt% sucrose, 10wt% to 25wt% glucose syrup and 45wt% to 65wt% fructose glucose syrup.

In a preferred embodiment, the aerated confectionery filling comprises 40wt% to 85wt% total monosaccharides and disaccharides, preferably 50wt% to 80wt%, and more preferably 60wt% to 80wt%.

When sugar syrup is used, this can conveniently provide the aqueous component of the confectionery so that additional water is not required. For example, in some embodiments a confectionery of the invention can consist essentially of sugar syrup, aggregated protein and one or more flavourings. In some embodiments, the confectionery comprises, consists of or consists essentially of 50wt% to 90wt% (e.g. 65wt% to 90wt%) invert (partial or full) sugar syrup, 1wt% to 8wt% (e.g. 2wt% to 6wt%) aggregated protein, and the balance provided by flavours or other agents.

As shown in the Examples, stable aerated confectioneries have been provided consisting of sugar syrup, aggregated whey protein and flavouring. The syrup may be present in some embodiments at 50wt% to 90wt%, 65wt% to 90wt%, 75wt% to 90wt%, or 90wt% to 90wt%. The protein may be present at any amount describe herein, for example 1wt% to 8wt%, 2wt% to 6wt% or 3wt% to 5wt%, for example around 2.5wt% or more, around 3wt% or more, around 4wt% or more, or around 5wt%. The flavouring may be present at between 1wt% to 30wt% of the confectionery, for example between 5wt% to 25wt% or around 10wt% to 20wt%.

In some embodiments, the total amount of sugar in the aerated confectionery filling is between 60wt% to 80wt%, or 60wt% to 70wt%.

The aerated confectionery filling of the invention is stabilised by the aggregated protein. Therefore, while additional agents can optionally be included such as gelling agents or setting agents, they are not required. The aerated confectionery filling provides a favourable texture and mouthfeel, so fat is not required and can be excluded, thereby providing a healthier fat-free product. Accordingly, in some embodiments the water-based aerated confectionery filling is substantially or completely devoid of fat, hydrocolloids, gelling or setting agents and/or thickeners.

In the present invention, the terms "substantially or completely devoid of" preferably mean the aerated confectionery filling comprises 3wt% or less, 2wt% or less, 1wt% or less, less than 0.1wt%, or most preferably 0wt% of said ingredients.

In some highly preferred embodiments, the aerated confectionery filling comprises 3wt% or less, 2wt% or less, 1wt% or less, less than 0.1wt%, or most preferably 0wt% of fat.

In some embodiments, the aerated confectionery filling comprises 3wt% or less, 2wt% or less, 1wt% or less, less than 0.1wt%, or 0wt% of a setting agent such as gelatin or pectin.

The aerated confectionery filling of the invention does not require egg based whipping agents, such as egg white or purified proteins from the egg white such as the albumen. Accordingly, in some embodiments egg proteins are absent from the aerated confectionery filling of the invention. In some embodiments the aerated confectionery filling is substantially or completely devoid of egg protein. In some highly preferred embodiments the water-based aerated confectionery filling is substantially or completely devoid of any ingredients derived from eggs. In some highly preferred embodiments, the aerated confectionery filling comprises 3wt% or less, 2wt% or less, 1wt% or less, less than 0.1wt%, or most preferably 0wt% of ingredients derived from eggs.

The aerated confectionery filling of the invention does not require the addition of a surfactant. The protein preferably provides the necessary interfacial stabilisation and/or plateau border stabilisation. Therefore in some embodiments there is no added surfactant. In one embodiment, there is no artificial, synthesized or chemical surfactant. In one embodiment, there is less than 0.1wt% surfactant, or no detectable surfactant, in the aerated confectionery filling of the invention.

In a preferred embodiment, the aerated confectionery filling of the invention does not require a stabilizer other than the, preferably aggregated, protein.

There is preferably no fat in the aerated confectionery filling, so a fat emulsifier is not required. In one embodiment, the aerated confectionery filling of the invention does not comprise an emulsifier.

The aerated confectionery filling of the invention does not require fibre. In one embodiment, the aerated confectionery filling of the invention is very low fibre or free of fibre.

In some embodiments, the water-based aerated confectionery filling has a bulk viscosity of at least 10Pa.S, for example 10Pa.S to 50Pa.S or preferably 10-25Pa.s. More preferably, the confectionery has a viscosity around 10-20Pa.S, most preferably 10-18 Pa.S or 10-16 Pa.S.

The viscosity recited above may be assessed as follows, preferably at 25 °C. Rheological properties of the non-aerated masses were measured by performing oscillatory rheolometry. These measurements were performed using a Physica MRC 500 rheometer (Anton Paar) equipped with a sanded Couette geometry (CC27-SN23479) and a Peltier system for temperature control. The Couette geometry was composed of a cup (14.46 mm radius) and a bob system (13.33 mm radius,40 mm length). Samples were covered with a low-viscosity silicone oil (Sigma Aldrich Ltd, Singapore) to avoid evaporation during measurements. The sample rested for 5 minutes at 25 °C before starting the experiments. The imposed frequency (1 Hz) and strain (0.5%) during oscillatory shear measurements were chosen within the linear response regime.

The aerated confectionery can be very significantly aerated with an overrun of at least 50%, for example around 100% or more. The overrun can be at least 125% or at least 150% in some embodiments. The overrun may be as high as up to 500% in some embodiments.

The overrun is preferably 60% to 200%, more preferably 60% to 160%. The percentage overrun refers to the degree of expansion resulting from the amount of air incorporated into the product during aeration. For example, an overrun of around 100%, means that air makes up 50% of its volume.

In some embodiments, the confectionery is aerated to a bulk density of 0.9 gr/cm³ or less, 0.8gr/cm³ or less, for example 0.6gr/cm³ or less, such as around 0.4g/cm³. By controlling the upper limit of the density, the whippability of the water-based aerated confectionery filling compositions is preferably optimised. A lower number for bulk density means more aeration.

In some embodiments, the confectionery is aerated to a bulk density of 0.1gr/cm³ or more, for example 0.2gr/cm³ or more, such as 0.3g/cm³ or more. By controlling the lower limit of the density, the flow properties necessary for depositing such compositions in confectionery products is optimally controlled. Hence, in embodiments, the bulk density is between 0.1gr/cm³ and 0.9gr/cm³, for example between 0.2gr/cm³ and 0.8gr/cm³. The term bulk density is used as the density includes the total volume, i.e. includes the pores (or voids or gas etc.) present in the water-based aerated confectionery filling.

In a preferred embodiment, the bulk density is preferably between 0.4 gr/cm³ and 0.8 gr/cm³, more preferably between 0.45 gr/cm³ and 0.75 gr/cm³ and most preferably between 0.50 gr/cm³ and 0.70 gr/cm³. As shown in the examples, these density ranges provides a balance between the whippability and flow properties necessary for depositing such compositions in confectionery products, preferably confectionery shells.

The water-based aerated confectionery filling of the invention preferably comprises one or more flavourings. Preferably, these flavourings contribute more than flavouring to the composition, e.g. may contribute bulk, nutritional properties etc., i.e. preferably these flavourings are not high intensity flavouring compositions. The flavouring is preferably consistent with the low acidity/neutral (pH 5.6 or more) nature of the confectionery". Such flavourings may comprise or consist of cocoa (e.g. cocoa powder), chocolate, vanilla, milk and/or nut-based flavours (e.g. hazelnut, peanut, etc.). A flavouring may be included at from 1wt% to 30wt% of the confectionery, for example around 10wt% to 20wt% or 1wt% to 10wt%. optionally between 10wt% and 30wt% or between 1wt% and 10wt%. If high intensity flavourings are required, the amount used is lower, preferably between 0.01wt% and 5wt% or between 0.05wt% and 2.5wt%.

The water-based aerated confectionery filling is stable. This means that it has an acceptable shelf-life between manufacture and consumption by the consumer, so that it has an acceptable appearance, taste and texture at the point of consumption. For a mousse, this means that the mousse is recognisable as a single mass and has not begun visible separation into a liquid phase (i.e. notable drainage has not occurred), nor has visible crystallisation of the sugars occurred.

Preferably, the aerated confectionery filling is stable for at least one month. Stability is usually determined by what a consumer determines as acceptable, but can also be formally assessed on the basis of drainage stability, sugar crystallisation and/or coarsening of the mousse bubbles as described in the Examples herein.

In simple terms, mousse or foam drainage refers to the pooling of liquid at the bottom of the foam or mousse. A stable mousse or foam is one without visible pooling after the set time period. Therefore, a mousse stable for three months does not show pooling visible by eye after three months.

In some embodiments, the water-based aerated confectionery filling is stable for at least three months, preferably at least six months.

Stability can be assessed at ambient temperature preferably 20°C or 18°C, or at a refrigerated temperature, preferably 4°C.

In a preferred embodiment, the water based aerated confectionery filling of the invention is not frozen nor is baked, i.e. the present invention relates to compositions at ambient or refrigerated temperatures, preferably not below 0°C and not above 100°C. Freezing or baking provides inherently different compositions from the desired aerated, "foamy" mouthfeel of the water-based compositions of this invention. Freezing provides solidified mixtures and baking water-based protein mixtures may lead to textures more akin to meringues.

In an alternative embodiment, the confectionery of the present invention may be frozen to provide a frozen confectionery. This may be achieved using well known, not particularly limited techniques, for example, using a freezer at -20°C to -18°C for a required time between 2 and 6 hours. However, the more preferred embodiments are ambient or refrigerated products.

In one embodiment, a water based aerated confectionery filling of the invention comprises 5wt% to 25wt% flavouring, 2wt% to 4wt% aggregated whey protein isolate, and 60wt% to 80wt% invert sugar syrup with preferably greater than 50% conversion but less than 70% conversion, preferably between 55% and 65%.

A further aspect of the invention provides a confectionery product comprising the water-based aerated confectionery filling of the invention. Preferably, the water-based aerated confectionery filling forms the filling of a chocolate, candy or sweet. Accordingly, one embodiment provides the water-based aerated confectionery is partly surrounded in chocolate or chocolate analogue. One embodiment provides the water-based aerated confectionery is completely surrounded in chocolate or chocolate analogue. One embodiment provides the water-based aerated confectionery is encased in chocolate or chocolate analogue. One embodiment provides the water-based aerated confectionery filling at least partly or completely surrounded or encased in chocolate or chocolate analogue, preferably a chocolate shell. In a preferred embodiment, the surrounding or encasing encompasses between 40% and 100% (a closed shell), preferably between 50% and 100%, and more preferably between 75% and 100% of the surface area of the filling is encompassed by the shell.

A further aspect of the invention provides method of making a water-based aerated confectionery filling, comprising introducing air into a liquid mass, wherein the liquid mass has a pH of at least 5.6 and a water activity less than 0.67 and preferably greater than 0.45. The liquid mass comprises at least 30wt% sugar and between 1wt% to 8wt% protein.

The step of introducing air into the liquid mass can comprise mechanical introduction of the air (e.g. whipping) or gas injection (e.g. nitrogen gas).

A further aspect of the invention provides a process for forming the aerated confectionery filling. According to the present invention that process is a method of making a confectionery composition comprising a water-based aerated confectionery filling with a chocolate or chocolate-analogue as defined above, comprising the steps of:
(i) Providing an aqueous solution of sugar;
(ii) Addition of protein to the aqueous solution and providing a solution of pH of greater than or equal to 5.6;
(iii) Heating the mixture to at least 50°C, preferably at least 60°C, more preferably between 70°C and 95°C, to denature the protein;
(iv) Cooling the mixture;
(v) Aerating the cooled mixture to provide a water-based aerated confectionery filling;
(vi) Depositing the water-based aerated confectionery in a shell of chocolate or chocolate analogue.

### Detailed Description of the Invention

The present inventors have developed a surprising technology based on an increased understanding of the feasibility of water-based aerated confectionery filling such as fillings for chocolates. Such fillings are desired by consumers, in particular within chocolate products. Detailed investigations by the inventors revealed that undesirable mousse drainage is inversely proportional to the bulk viscosity of liquid filling.

The present inventors conducted systematic studies to address the key hypotheses: how to stabilize low acidity/neutral pH mousses using aggregated proteins; how to prevent mousse drainage by regulating plateau border viscosity; and how to prevent sugar crystallisation in the humectant mix by limiting the concentration of a single sugar below its saturation.

The results of these extensive investigations showed that heat induced aggregation of whey protein surprisingly improved foam performance, with increasing aggregated protein contents showing superior stability.

The key scientific challenge was how physically to stabilize aqueous mousses against drainage and coarsening, and how to prevent crystallization of sugars during mousse lifetime. Mousses undergo two main types of destabilization; i) drainage of the liquid from the bubbles and ii) coarsening of the bubble size distribution via coalescence and Ostwald ripening. Ostwald ripening is the transfer of air from small bubbles to the larger bubbles due to the difference in Laplace pressure.

Without wishing to be bound by theory, drainage of the mousse plateau border can be slowed by reducing liquid flow between adjacent bubbles by increasing bulk liquid viscosity (via, i) sugar type, ii) moisture content (or water activity), iii) temperature or iv) hydrocolloids and/or v) by restricting flow by clogging/plugging the plateau border with protein aggregates. Coarsening of the mousse bubbles can be slowed by: i) having a viscoelastic interface that prevents coalescence and potentially slows Ostwald ripening by providing a resistance to bubble shrinkage.

Crystallization of the humectant sugar mix that is the aqueous phase can be prevented by controlling the total concentration of a single small sugar either by controlling the extent of sugar inversion or by using a blend of different sugars.

The data presented in the Examples demonstrate the validity of these approaches to physically stabilizing ambient aqueous mousses.

The invention provides a water-based aerated confectionery filling having a pH of equal to or greater than 5.6 and a water activity less than 0.67. The confectionery comprises sugar and protein. The protein is thermally denatured, preferably aggregated, during processing by application of heat in the given pH. The protein stabilise the water-based aerated confectionery filling. The confectionery preferably comprises 30wt% to 90wt% sugar and between 1wt% to 8wt% aggregated protein.

One aspect of the invention provides an aerated confectionery filling product, preferably a foam or a mousse, created with whey protein isolate (WPI) or a whey protein concentrate (WPC), wherein the aerated confectionery filling has a pH of greater than or equal to 5.6; and has a water activity less than 0.67; and comprises 30wt% to 90wt% sugar, wherein
at least two sugars are present, wherein one of the sugars is fructose that forms at least 10wt% of the total sugar content; comprises between 1wt% to 8wt% protein,wherein
the protein stabilises the water-based aerated confectionery and the protein has been thermally denatured
and the water-based aerated confectionery is partly or completely surrounded or encased in chocolate or chocolate analogue.

Without wishing to be bound by theory, the viscosity is thought to control drainage in these foams. The aerated product is stable for several months without drainage at a temperature from 4°C up to room temperature.

Commonly, in the field of confectionery flavourants and colourants are added to intensify the taste and visual appeal of the products. These additives are generally intense in their properties and are added in small amounts as a highly active agent in a water-based or oilbased matrix, dependent on the solubility of the active agent. In embodiments where additives (preferably colourants and/or flavourants, preferably compounds that are added only to provide colour and/or flavouring, i.e. do not provide significant nutritional, bulking etc. properties) are included in the water-based aerated confectionery filling, the additives are water-soluble (i.e. are not oil-soluble). It is understood that the term "soluble" has the understood meaning in the art, i.e. ability to be dissolved in a specific medium at ambient conditions, preferably at 20°C.

### Denatured Protein

The Examples demonstrate the stabilisation of aerated compositions with thermally denatured protein. In particular, foam drainage stability is shown to be boosted by higher levels of thermally denatured whey protein from whey protein isolate. Heat aggregation is also shown to boost low shear bulk viscosity, thereby stabilising mousses.

The invention generally relates to the use of a protein to create a stabilised foam in low acidity/neutral pH conditions in a high sugar, optionally fat-free system. The protein is thermally denatured, preferably aggregated protein, in particular aggregated whey protein. The aggregated protein is preferably whey protein. This may be provided by whey protein isolate or whey protein concentrate, which terms are known in the art.

An example of whey protein isolate (WPI) is BiPro^{®} 9500, commercially available from Agropur Inc., Eden Prairie, MN 55344 USA. Whey protein isolate such as BiPro^{®} 9500 preferably is manufactured from fresh, sweet dairy whey that is concentrated and spray dried. Whey protein isolate is preferably lactose-free based on US regulatory labelling of sugars and carbohydrates in products that contain less than 0.5g per serving as "0g" or "Sugar Free". Whey protein isolate preferably comprises a maximum of 3wt% ash, 1wt% fat, 0.5wt% lactose and 5wt% moisture. Whey protein isolate preferably comprises primarily beta-lactoglobulin and alpha-lactalbumin, at around 85wt% to 95wt% (e.g. 90wt%) protein.

Another commercially-available whey protein isolate that can be used according to the invention is the "WPI" product available from Sachsenmilch Leppersdorf GmbH, Leppersdorf, Germany. This preferably contains around 0.1wt% fat, around 90wt %protein (around 92wt% of the dry matter), around 1.8wt% lactose, up to 3wt% ash and 4wt% water.

Whey protein isolate is preferably not denatured and is soluble over a pH range of pH 2 to pH 9. Therefore, aggregation of WPI is preferably required for use in the present invention.

An example of whey protein concentrate (WPC) is the WPC80 product that is commercially available from Fonterra, Heerenveen, Netherlands. WPC is preferably around 75wt% to 85wt% protein (e.g. around 80wt%) and comprises small amounts of fat (e.g. 5wt%), moisture (e.g. 5wt%), ash (e.g. 3wt%) and lactose (e.g. 5wt%).

The protein is thermally denatured, preferably induced to aggregate, for example heating to a temperature 50°C or greater, 60°C or greater, 70°C or greater or 80°C or greater, for example 70°C to 85°C.

In a preferred embodiment, the aggregation may take place over a time period of greater than 2 minutes, greater than 5 minutes or greater than 10 minutes. For example, the time period may be less than 1 hour, less than 45 minutes or less than 30 minutes. For example, between 2 minutes and 1 hour.

In some embodiments, the protein is present in an amount at least 2wt% of the aerated confectionery filling, optionally at least 2wt% or at least 2.2wt%, or at least 3wt% or 3.3wt%. Favourable effects may be obtained with higher levels of aggregated protein.

### Sugars

The Examples also show the stabilisation against draining using sugars. In particular, the interaction of temperature, water content and sugar type control mousse drainage.

Mousse destabilisation caused by liquid draining can be controlled by controlling the bulk viscosity. Undesirable sugar crystallisation can also be controlled through sugar blending. Combined, these features provide aerated confectionery filling that are stable for weeks or months, for example 3 months or more.

The aerated confectionery filling is preferably high in sugar, for example comprising sugar at between 40wt% and 90wt%. In some embodiments, the total amount of sugar in the aerated confectionery filling is between 60wt% to 80wt%.

In some embodiments, the sugar is a sugar syrup. Suitable sugar syrups include glucose syrup preferably at 40 to 70 Dextrose Equivalent ("DE"), fructose glucose syrup, high fructose syrup, corn syrup, oat syrup, rice syrup or tapioca syrup. A mixture of two or more of these syrups can be used.

Such syrups are well known in the art. Glucose syrups are well known in the art and are obtained by hydrolysis of starches, generally vegetable starches. Glucose syrups are described in Glucose Syrups, Technology and Applications, Peter Hull, Wiley-Blackwell 2010.

In a preferred embodiment, the glucose syrup has a DE value in the range of 35-95, preferably in the range of 35-70 or 40-70, more preferably in the range of 35-63.

Similarly, fructose glucose syrups are prepared from hydrolysis of starch, generally vegetable starches, and then isomerisation to produce fructose. As in the production of conventional corn syrup, the starch may be broken down into glucose by enzymes. To make the fructose corn syrup, the corn syrup is further processed by D-xylose isomerase to convert some of its glucose into fructose. Common commercially used syrups are "HFCS 42" and "HFCS 55" and this nomenclature refers to dry weight fructose compositions of 42% and 55% respectively, the rest typically being glucose or glucose and an amount of other carbohydrates.

In a preferred embodiment, the fructose glucose syrups generally contain between 5wt% and 75wt% fructose, preferably between 20wt% and 70wt%, more preferably between 30wt% and 60wt% and more preferably between 35wt% and 55wt%. These percentages are on a dry solids basis.

In a preferred embodiment, the fructose glucose syrups generally contain between 5wt% and 75wt% glucose, preferably between 20wt% and 70wt%, more preferably between 30wt% and 60wt% and more preferably between 35wt% and 55wt%. These percentages are on a dry solids basis.

Undesirable crystallisation of the sugar in the aerated confectionery filling can be avoided when the sugar comprises or consists of at least two different sugars, preferably comprising fructose. A suitable blend of sugars is provided by an invert sugar with a sugar conversion percentage at least 10% but below 70%, below 60%, below 50% or below 40%. A conversion rate of 40% to 50% is shown to provide desirable results in the Examples. In some embodiments, the sugar is an invert sugar with a sugar conversion percentage (i.e. degree of hydrolysis) of 20% to 60%, 30% to 50% or 40% to 50%.

The presence of fructose in the sugar mix is highly preferred. Preferably, between 10wt% and 50wt% of the sugar (i.e. from 1/10 to ½ of the sugars, preferably at least 1/5) is fructose. More preferably, around 20wt% to 30wt%, for example 20wt% to 25wt% of the sugars are fructose. This can be achieved either by blending different sugar rich ingredients (such as powder sugars, starch derived syrups or inverted sugar syrup) or by using a partially inverted sugar syrup comprising sucrose, dextrose and fructose.

In a preferred embodiment, the aerated confectionery filling comprises a sugar mix and the confectionery comprises 5wt% to 30wt% sucrose, 5wt% to 30wt% glucose syrup and 35wt% to 75wt% fructose glucose syrup.

In a more preferred embodiment, the aerated confectionery filling comprises a sugar mix and the confectionery comprises 10wt% to 25wt% sucrose, 10wt% to 25wt% glucose syrup and 45wt% to 65wt% fructose glucose syrup.

This mixture of sugars in the confectionery may also be defined as a percentage of reducing sugars, because sucrose is a non-reducing sugar while dextrose and fructose are reducing sugars. Accordingly, the sugar in the aerated confectionery filling preferably comprises at least 10% but less than 70% reducing sugars, with the remainder being non-reducing sugars. In some embodiments, the sugar comprises 10% to 60% reducing sugars, 20% to 60% reducing sugars, or 30% to 50% reducing sugars. The Examples demonstrate the use of a sugar mixture comprising 40wt% to 50wt% (specifically 41wt% to 49wt%) reducing sugars. The mixture of reducing sugar and non-reducing sugar can be provided as a partially-inverted sugar syrup.

A fully hydrolysed (~97% inverted) invert syrup, in which essentially all sucrose is broken down to dextrose and fructose, may crystallise in aerated products. A partially hydrolysed syrup, for example hydrolysis above 10% but below 70%, preferably less than 60% hydrolysed (inverted) is more stable according to the present invention and does not crystallise.

In one embodiment, the sugar comprises or consists of partially hydrolysed invert syrup. In another embodiment, the sugar comprises or consists of a mix of sucrose, partially or fully-inverted syrup, and glucose. In a further embodiment, the sugar comprises or consists of a mixture of sucrose, fructose and glucose.

Accordingly, a mixture of sugars is preferably used according to the invention. Preferably the mixture comprises fructose.

Invert sugar may be fully inverted sugar syrup or, preferably, partially inverted sugar syrup. Fully inverted sugar syrup comprises only glucose and fructose. Partially-inverted sugar syrup comprises glucose, fructose and sucrose and is preferred.

Accordingly, a balance or mixture of sugars is preferably provided.

An example of a mixture of sugars used in the Examples comprises a mixture of sucrose, inverted syrup (itself containing sucrose, glucose and fructose) and glucose.

The "221" partially inverted sugar syrup used in some of the Examples is available from British Sugar plc, Peterborough, United Kingdom as "Partial Invert Syrup 221". It is a pale straw-coloured solution of white sugar in potable water, produced from sugar beet. This syrup comprises 41-49% reducing sugars as determined by Lane & Eynon titration using Fehlings solution and Methylene blue indicator. Invert 221 is a partially inverted sugar syrup so comprises a proportion of non- hydrolysed sucrose along with equal fractions of fructose and dextrose. Compared to fully inverted sugar syrup (only fructose and dextrose) it is less prone to crystallise.

An alternative to IS221 is a mix of sucrose, and fructose-glucose syrup.

In some embodiments, the total amount of sugar in the aerated confectionery filling is between 60wt% to 90wt%, for example 75wt% to 85wt%.

In a preferred embodiment, the aerated confectionery filling comprises 40wt% to 85wt% total monosaccharides and disaccharides, preferably 50wt% to 80wt%, and more preferably 60wt% to 80wt%.

### Process

The present invention provides a method of making the confectionery compositions comprising a water-based aerated confectionery filling as defined above with a chocolate or chocolate-analogue, comprising the steps of:
(i) Providing an aqueous solution of sugar;
(ii) Addition of protein to the aqueous solution and providing a solution of pH of greater than or equal to 5.6;
(iii) Heating the mixture to at least 50°C, preferably at least 60°C, more preferably between 70°C and 95°C, to denature the protein;
(iv) Cooling the mixture;
(v) Aerating the cooled mixture to provide a water-based aerated confectionery filling;
(vi) Depositing the water-based aerated confectionery in a shell of chocolate or chocolate analogue.

In an embodiment the aqueous sugar solution is a mixture of sugar and water.

In a preferred embodiment, the aqueous sugar solution is a sugar syrup.

The protein is thermally denatured and preferably be aggregated. The protein is preferably denatured by heat, for example heating to a temperature 50°C or greater, 60°C or greater, 70°C or greater or 80°C or greater, for example between 50°C and around 100°C, between 60°C and around 95°C, between 70°C and 90°C, for example between 75°C and around 85°C. In preferred embodiments, the thermal denaturing causes the formation of aggregates.

In a preferred embodiment, the denaturation may take place over a time period of greater than 2 minutes, greater than 5 minutes or greater than 10 minutes. For example, the time period may be less than 1 hour, less than 45 minutes or less than 30 minutes. For example, between 2 minutes and 1 hour.

In a preferred embodiment, step (iii) yields a solution with a Brix degree of between 73 and 83 Brix, preferably between 75 and 81 Brix, preferably between 76 and 81 Brix, most preferably between 77 and 79 Brix.

The skilled person will be aware that Degrees Brix (symbol °Bx) is the sugar content of an aqueous solution. One degree Brix is 1 gram of sucrose in 100 grams of solution and represents the strength of the solution as percentage by mass. The Degrees Brix can be measured, for example, by refractometer.

In a preferred embodiment, the mixture is allowed to cool to less than 80 °C, preferably less than 70 °C, more preferably less than 60 °C, most preferably less than 50 °C, greater than 5 °C, preferably greater than 15 °C, most preferably greater than 25 °C, between 5°C and 80°C, preferably between 15°C and 70°C, more preferably between 15°C and 55°C, most preferably between 20°C and 40°C.

In a preferred embodiment, other ingredients (e.g. flavourings and/or colourings) may be added at the appropriate moment. For example, either prior to aeration or post-aeration as applicable.

Formation of the casing and depositing within the casing may be done by known methods in the art.

### Aeration

The creation of a mousse involves the introduction of a gas into a liquid mass, either by mechanical introduction of the air (whipping) or via gas injection or both. The term "aerated" is used to encompass air as well as gases other than air, as is standard in the art of aeration of foodstuffs. For example, nitrogen, carbon dioxide, nitrous oxides etc. A high sugar environment presents challenges to the ability to mechanically introduce air because the sugar solution is highly viscous, but temperature can control this by having zones within the process. Once the air is introduced into the liquid surface active molecules need to rapidly adsorb to the interface to prevent the bubbles bursting. To be effective at stabilizing bubbles such emulsifiers need to rapidly adsorb to the interface under convective mixing and they need to form a strong interfacial film to resist Marangoni effects and prevent bubble coalescence once the plateau border has drained.

The present inventors created ambient stable aqueous mousses for confectionery fillings.

The aerated confectionery filling is filled into in a chocolate shell or coating. In some embodiments bonbon shells can be used, while in other embodiments tablets may also be used. In some embodiments, the invention provides a confectionery product containing the aerated filling according to the invention. By "chocolate", the present invention encompasses the use of white, dark and milk chocolate or mixtures thereof, as well as chocolate analogues, such as compound chocolate. Chocolate analogues also encompassed "plant-based" chocolate alternatives (i.e. where the milk-based ingredients have been replaced with plant alternatives, e.g. comprising pea or oat ingredients/materials or alike).

Existing equipment can be used to produce aerated confectionery filling according to the invention and, optionally, filling chocolate shells with it. Apart from the normal capabilities for production of filled chocolate products (shell making, depositing, backing off) the capability of making the filling is needed. For this the mixing and cooking of water-based ingredients and subsequently aerating them is necessary. Preparation of the filling mass can take place in a batch tank with heating capabilities to 80-90 °C. Aeration of the filling can take place in a continuous aerator (e.g. Mondomix) connected to a dedicated water-based line fitted with a CIP system.

### Confectionery Filling Composition

As mentioned above, the water-based aerated confectionery filling of the present invention, also referred to herein as "water-based aerated confectionery" or "aerated confectionery" or "confectionery filling", is preferably a composition for providing a filling for a confectionery product.

The filing composition of the invention may be a confectionary filling for use in a composite product such as a sandwich, a biscuit, a wafer, or other composite confectionary product. The filling composition may provide a topping, e.g. for use on top of a composite product, or a spread.

However, the most advantageous use of the filling compositions of the present invention is for use as fillings in chocolate or chocolate analogue products.

This is because the present invention allows an increase in stability without significantly affecting texture nor sensory attributes of the filling and the final product. This is particularly important for confectionery products where the eating experience is key for the product.

Furthermore, a long shelf life stability is important for fillings owing to the relatively long shelf life of chocolate and chocolate analogues, i.e. the filling needs to be stable for as long as the chocolate. This is a difference of filling chocolate products as compared to making fillings for sandwich biscuits where the biscuit has a shorter shelf life than chocolate. However, for aqueous-based fillings, the control of the stability and moisture retention is particularly important for confectionery products - moisture leakage may lead to product spoiling.

An embodiment of the present invention provides a foodstuff comprising the filling composition of the present invention, preferably the foodstuff is a confectionery product, preferably a chocolate (or equivalents thereof, such as compound) product.

The present invention provides a filled chocolate or chocolate-analogue shell, filled with the filling of the present invention.

In a preferred embodiment, the filling of the present invention is not-baked, i.e. it is not included in a foodstuff which requires further cooking after the filling has been deposited.

In an embodiment, provided is a filled foodstuff product, preferably a filled chocolate product, preferably a chocolate shell filled with the filling of the invention, that comprises from 5 to 95% by weight of the product of the filling of the invention, preferably from 10 to 90%, preferably from 20 to 70% or from 30 to 50%.

Preferably, the remainder of the product being a shell of chocolate-like material such as compound or chocolate that substantially encloses (for example completely encloses) the product. Hence, in an embodiment, the chocolate-like material may comprise from 5 to 95% by weight of the product, preferably from 10 to 90%, preferably from 30 to 80% or from 50 to 70%.

Another embodiment of the invention provides a chocolate confectionery product, which comprises a filling of the present invention surrounded by an outer layer of a chocolate product, for example, a praline, chocolate shell product, a truffle, a filled-tablet and/or chocolate coated wafer or biscuit any of which may or may not be layered. The chocolate coating can be applied or created by any suitable means, such as enrobing, cold stamping (frozen cone, cold forming, etc.) or moulding.

The above embodiments relating to filled chocolate products are highly preferred.

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate). Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

According to another aspect, there is provided a composite product comprising the filling composition according to the invention. The composite product may be, for instance, a sandwich, biscuit, cracker, wafer, or bakery foodstuff product comprising the filling composition of the invention as a filling or as a topping.

Specifically, baked foodstuffs used in the invention may be sweet or savoury. Preferred baked foodstuffs may comprise baked grain foodstuffs, which term includes foodstuffs that comprise cereals and/or pulses. Baked cereal foodstuffs are more preferred, most preferably baked wheat foodstuffs such as wafer(s), cracker(s), cookie(s), muffin(s), extruded snack(s) and/or biscuit(s).

Wafers may be flat or shaped (for example into a cone or basket for ice cream) and biscuits may have many different shapes. More preferred wafers are non-savoury wafers, for example having a sweet or plain flavour.

The invention will now be described in further details in the following non-limiting examples.

### Examples

### Example 1

To confirm the stability and whipping properties of the compositions of the present invention, the following experiments were carried out.

A base recipe containing:

| **Ingredient** | **Weight Percentage** | **Total solids Contribution to entire composition** |
|---|---|---|
| Water | 0.4 | 0 |
| Whey Protein (as above) | 3.0 | 3.0 |
| Granular Sucrose | 18.3 | 18.3 |
| Fructose-Glucose syrup (Isosweet 111) | 59.5 | 42.3 |
| 63 DE Glucose Syrup | 18.8 | 15.4 |
| Total | 100 | 79.0 |

The fructose-glucose syrup was 71% total solids and 41% fructose (on a dry weight basis).

The overall sugar content (mono- and di-saccharides) was calculated to be 70%. Fructose contributed 25% of the total sugars (dry weight basis). Dextrose contributed 29%, Glucose 9%, Maltose 12% and Sucrose 25%.

The non-protein ingredients were mixed together at 40°C to achieve a 78 Brix and then the protein was added and the temperature raised to 60°C and sheared for 1 minute. The mixture was heated up to and held at a temperature of 80°C whilst being stirred constantly. The mixture was held for 5 minutes and stirring continued. The pH was measured and found to be 6.5 at 20°C. The composition underwent whipping to give aerated compositions where the density and water activity was measured. The density was measured using a scale and volume calculation, i.e. a bulk density. The whipping was assessed visually and by hand to assess how easily the composition could be whipped to introduce air into the mixture. The whipping was assessed on batches both hand-whipped and whipped using a bench-scale food whipper (Hobart, 5L benchtop mixer, speed setting 3).

A Comparative Example was prepared without the heat treatment steps of heating at 60°C and 80°C and the same process and analysis were carried out.

The aW of the inventive example was 0.53 and the Comparative Example was 0.49. The inventive example was found to aerate well and displayed a bulk density of 0.67g/cm3. The Comparative Example had a density of 1.2g/cm3. This is indicative of very poor aeration caused by the lack of denatured protein at the pH required by the system.

Each sample was split into a number of batches for stability analysis. The samples were stored at 20°C and 25°C and 65% relative humidity. The compositions were visually assessed weekly after 12 weeks. The inventive samples had not changed with time. The samples not utilising a thermally denatured protein were observed to suffer from drainage within 1 to 2 weeks.

### Example 2

The above filling was aerated in on pilot plant scale using a rotor/stator system with gas injection point (Mondomix). The mixing head is temperature controlled via a water jacket other parameters that are controllable are the speed of the mixing head, the temperature of the mass entering the mixing head, the pressure in the inlet of the mixing head, pressure inside of the mixing head and back pressure, gas flow and pressure, inlet pump speed. Two different set of settings were used to ensure a low and high aeration (approximately 0.8 and 0.6 gr/cm3 respectively).

The table below provides the details:

| | HIGH | LOW |
|---|---|---|
| Jacket temperature (degree Celsius) | 40 | 40 |
| Mixing Head Speed (per minute) | 320 | 320 |
| Mixing Head Water Temperature (degree Celsius) | 18 | 18 |
| Density (gram per litre) | 0.6 | 0.8 |
| Mondo input pressure (bar) | 6.5 | 6 |
| Mixing Head Pressure (bar) | 6.5 | 4 |
| Back Pressure (bar) | 4 | 2 |
| Pump Speed | 250 | 250 |

The mass was fed to the mixing head at 40°C to ensure that the viscosity is lower and mixing and bubble incorporation can be facilitated. Then the mass was cooled down as it was aerated to ensure the stabilisation of the bubbles by building up the viscosity. The different pressures (together with the gas flow rate probably) control the aeration level.

The filling comes out aerated and cooled to a lower temperature (around 30°C) that could then be used directly for filling chocolate shells.

### Example 3

Aqueous sugar mixtures were prepared using various ratios of Glucose Fructose Syrup Isosweet111 or Invert Sugar 221, Glucose Syrup 63DE or Glucose Syrup 72DE, and Sucrose and aerated compositions were prepared according to the above recipe but using these sugar mixtures to replace the sugars of Example 1. Preparation Examples 1-15 used Glucose Syrup 63DE and Preparation Examples 16 to 30 used Glucose Syrup 72DE. Invert Sugar 221 was used in Preparation Examples 11 and 26 instead of Glucose Fructose Syrup Isosweet111, which was used in all other Preparation Examples. The sugar profiles achieved are displayed below.

Aerated fillings were prepared using the base recipe of Example 1 and the process set out above.

### Example 4

Vanilla flavouring was added to the recipe of Example 1 to provide a composition comprising 0.15wt% vanilla prior to whipping. The pH was taken as 6.6 and the mixture was aerated using the equipment and process of Example 2 varies to provide a range of batches with densities of 0.48g/cm3 to 0.55g/cm3. The batches were deposited by hand into chocolate shells and backed off with chocolate to provide filled chocolate confections.

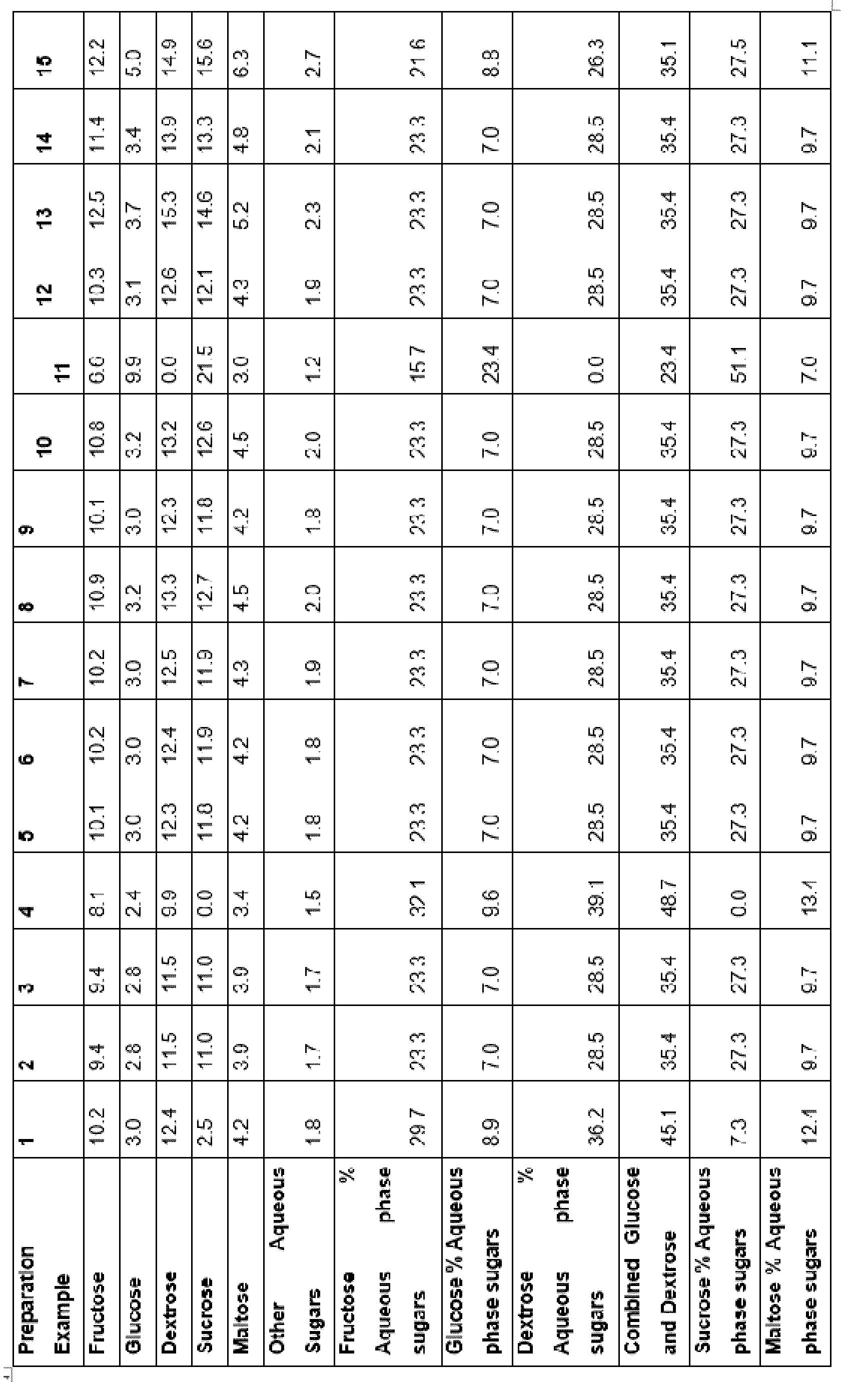

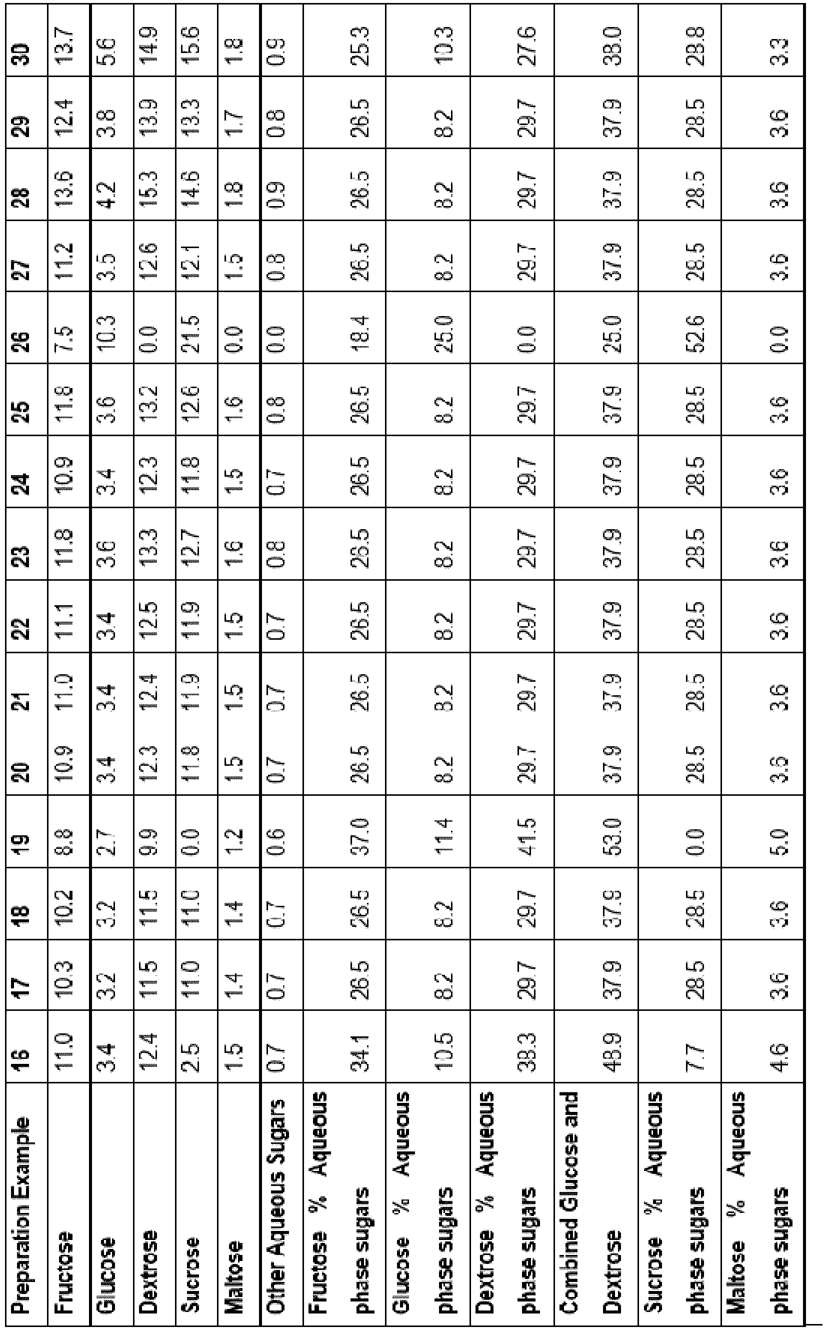

The aspects described herein are not limited to specific embodiments, apparatus, or configurations, and as such can, of course, vary. The terminology used herein is for the purpose of describing particular aspects only and, unless specifically defined herein, is not intended to be limiting.

Throughout this specification, unless the context requires otherwise, the word "comprise" and "include" and variations (e.g., "comprises," "comprising," "includes," "including") will be understood to imply the inclusion of a stated component, feature, element, or step or group of components, features, elements or steps but not the exclusion of any other integer or step or group of integers or steps.

As used in the specification and the appended claims, the singular forms "a," "an" and "the" include plural referents unless the context clearly dictates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

## Claims

1. A confectionery composition comprising a chocolate or chocolate analogue confectionery filled with water-based aerated confectionery filling, wherein the water-based aerated confectionery filling:
has a pH of greater than or equal to 5.6; and
has a water activity less than 0.67; and
comprises 30wt% to 90wt% sugar, wherein at least two sugars are present, wherein one of the sugars is fructose that forms at least 10wt% of the total sugar content;
comprises between 1wt% to 8wt% protein,
wherein the protein stabilises the water-based aerated confectionery and the protein has been thermally denatured and the water-based aerated confectionery is partly or completely surrounded or encased in chocolate or chocolate analogue.

2. A confectionery composition according to claim 1, wherein the water-based aerated confectionery filling has a pH between 5.6 and 10.0, or between 6.0 and 8.0.

3. A confectionery composition according to any preceding claim, wherein the protein is whey protein.

4. A confectionery composition according to any preceding claim, wherein the protein is present in an amount at least 2wt% of the water-based aerated confectionery filling, optionally at least 2wt%, at least 2.2wt%, at least 3wt% or at least 3.3wt%.

5. A confectionery composition to any preceding claim, wherein in the water-based aerated confectionery filling, the sugar comprises or consists of:
an invert sugar with a sugar conversion percentage between 10% and 70%, between 10% and 65%, between 20% and 60%, or between 40% and 60%.

6. A confectionery composition according to any preceding claim, wherein in the water-based aerated confectionery filling from 20wt% to 65wt% of the sugar is glucose and/or dextrose.

7. A confectionery composition according to any preceding claim, wherein from 10wt% to 50wt% of the sugar is fructose.

8. A confectionery composition according to any preceding claim, comprising sugar at between 40wt% and 90wt%.

9. A confectionery composition according to any preceding claim, wherein the water activity of the water-based aerated confectionery filling is greater than 0.45 and no greater than 0.64 or no greater than 0.59.

10. A confectionery composition according to any preceding claim, wherein the water-based aerated confectionery filling has an overrun of 60% to 200%, more preferably 60% to 160%.

11. A confectionery composition according to any preceding claim, wherein the water-based aerated confectionery filling is aerated to a bulk density of less than 0.8gr/cm³.

12. A confectionery composition according to any preceding claim, wherein the water-based aerated confectionery filling is substantially or completely devoid of 1, 2, 3, **4, 5,** 6, 7 or 8 of the following:
fat;
hydrocolloids;
surfactants;
emulsifiers;
dietary fibre;
gelling agents;
thickeners; and
egg-derived products.

13. A method of making a confectionery composition comprising a water-based aerated confectionery filling with a chocolate or chocolate-analogue as defined in claims 1 tc 12, comprising the steps of:
(i) Providing an aqueous solution of sugar;
(ii) Addition of protein to the aqueous solution and providing a solution of pH of greater than or equal to 5.6;
(iii) Heating the mixture to at least 50°C, preferably at least 60°C, more preferably between 70°C and 95°C, to denature the protein;
(iv) Cooling the mixture;
(v) Aerating the cooled mixture to provide a water-based aerated confectionery filling;
(vi) Depositing the water-based aerated confectionery in a shell of chocolate or chocolate analogue.

14. The method according to claim 13, wherein step (iii) yields a solution with a Brix degree of between 76 and 81 Brix.

## Patentansprüche

1. Süßwarenzusammensetzung, umfassend eine Schokoladen- oder Schokoladenanalogsüßware, die mit wasserbasierter, mit Luft versetzter Süßwarenfüllung gefüllt ist, wobei die wasserbasierte, mit Luft versetzte Süßwarenfüllung:
einen pH-Wert von größer als oder gleich 5,6 aufweist; und
eine Wasseraktivität von weniger als 0,67 aufweist; und
30 Gew.-% bis 90 Gew.-% Zucker umfasst, wobei mindestens zwei Zucker vorhanden sind, wobei einer der Zucker Fructose ist, die mindestens 10 Gew.-% des gesamten Zuckergehalts ausbildet.
zwischen 1 Gew.-% bis 8 Gew.-% Protein umfasst,
wobei das Protein die wasserbasierte, mit Luft versetzte Süßware stabilisiert und das Protein thermisch denaturiert wurde und die wasserbasierte, mit Luft versetzte Süßware teilweise oder vollständig von Schokolade oder einem Schokoladenanalogon umgeben oder umhüllt ist.

2. Süßwarenzusammensetzung nach Anspruch 1, wobei die wasserbasierte, mit Luft versetzte Süßwarenfüllung einen pH-Wert zwischen 5,6 und 10,0 oder zwischen 6,0 und 8,0 aufweist.

3. Süßwarenzusammensetzung nach einem vorstehenden Anspruch, wobei das Protein Molkenprotein ist.

4. Wasserbasierte mit Luft versetzte Süßwaren nach einem vorstehenden Anspruch, wobei das Protein in einer Menge von mindestens 2 Gew.-% der wasserbasierten, mit Luft versetzten Süßwarenfüllung, optional mindestens 2 Gew.-%, mindestens 2,2 Gew.-%, mindestens 3 Gew.-% oder mindestens 3,3 Gew.-%, vorhanden ist.

5. Süßwarenzusammensetzung nach einem vorstehenden Anspruch, wobei in der wasserbasierten, mit Luft versetzten Süßwarenfüllung der Zucker umfasst oder besteht aus:
einem Invertzucker mit einem Zuckerumwandlungsgrad zwischen 10 % und 70 %, zwischen 10 % und 65 %, zwischen 20 % und 60 % oder zwischen 40 % und 60 %.

6. Süßwarenzusammensetzung nach einem vorstehenden Anspruch, wobei in der wasserbasierten, mit Luft versetzten Süßwarenfüllung 20 Gew.-% bis 65 Gew.-% des Zuckers Glukose und/oder Dextrose ist.

7. Süßwarenzusammensetzung nach einem vorstehenden Anspruch, wobei 10 Gew.-% bis 50 Gew.-% des Zuckers Fructose ist.

8. Süßwarenzusammensetzung nach einem vorstehenden Anspruch, umfassend Zucker zwischen 40 Gew.-% und 90 Gew.-%.

9. Süßwarenzusammensetzung nach einem vorstehenden Anspruch, wobei die Wasseraktivität der wasserbasierten, mit Luft versetzten Süßwarenfüllung größer als 0,45 und nicht größer als 0,64 oder nicht größer als 0,59 ist.

10. Süßwarenzusammensetzung nach einem vorstehenden Anspruch, wobei die wasserbasierte, mit Luft versetzte Süßwarenfüllung einen Aufschlag von 60 % bis 200 %, mehr bevorzugt 60 % bis 160 %, aufweist.

11. Süßwarenzusammensetzung nach einem vorstehenden Anspruch, wobei die wasserbasierte, mit Luft versetzte Süßwarenfüllung auf eine Schüttdichte von weniger als 0,8 g/cm³ mit Luft versetzt ist.

12. Süßwarenzusammensetzung nach einem vorstehenden Anspruch, wobei die wasserbasierte, mit Luft versetzte Süßwarenfüllung im Wesentlichen oder vollständig frei ist von 1, 2, 3, 4, 5, 6, 7 oder 8 der Folgenden:
Fett;
Hydrokolloiden;
Tensiden;
Emulgatoren;
Ballaststoffen;
Gelierungsmitteln;
Verdickungsmitteln; und
von Eiern abstammenden Erzeugnissen.

13. Verfahren zum Herstellen einer Süßwarenzusammensetzung, umfassend eine wasserbasierte, mit Luft versetzte Süßwarenfüllung mit einer Schokolade oder einem Schokoladenanalog, wie in den Ansprüchen 1 bis 12 definiert, umfassend die Schritte:
(i) Bereitstellen einer wässrigen Lösung von Zucker;
(ii) Zugeben von Protein zu der wässrigen Lösung und Bereitstellen einer Lösung mit einem pH-Wert von größer als oder gleich 5,6;
(iii) Erwärmen der Mischung auf mindestens 50 °C, vorzugsweise mindestens 60 °C, mehr bevorzugt zwischen 70 °C und 95 °C, um das Protein zu denaturieren;
(iv) Abkühlen der Mischung;
(v) Belüften der gekühlten Mischung, um eine wasserbasierte, mit Luft versetzte Süßwarenfüllung bereitzustellen;
(vi) Einbringen der wasserbasierten, mit Luft versetzten Süßware in eine Hülle aus Schokolade oder einem Schokoladenanalogon.

14. Verfahren nach Anspruch 13, wobei Schritt (iii) eine Lösung mit einem Brix-Grad zwischen 76 und 81 Brix ergibt.

## Revendications

1. Composition de confiserie comprenant une confiserie en chocolat ou en analogue de chocolat fourrée avec un fourrage de confiserie aéré à base d'eau, dans laquelle le fourrage de confiserie aéré à base d'eau :
a un pH supérieur ou égal à 5,6 ; et
a une activité de l'eau inférieure à 0,67 ; et
comprend de 30 % en poids à 90 % en poids de sucre, dans laquelle au moins deux sucres sont présents, dans laquelle l'un des sucres est le fructose qui forme au moins 10 % en poids de la teneur totale en sucre ;
comprend entre 1 % en poids et 8 % en poids de protéine,
dans laquelle la protéine stabilise la confiserie aérée à base d'eau, et la protéine a été dénaturée thermiquement, et la confiserie aérée à base d'eau est partiellement ou complètement entourée ou enrobée de chocolat ou d'un analogue de chocolat.

2. Composition de confiserie selon la revendication 1, dans laquelle le fourrage de confiserie aéré à base d'eau a un pH compris entre 5,6 et 10,0, ou entre 6,0 et 8,0.

3. Composition de confiserie selon l'une quelconque des revendications précédentes, dans laquelle la protéine est une protéine de lactosérum.

4. Composition de confiserie selon l'une quelconque des revendications précédentes, dans laquelle la protéine est présente en une quantité d'au moins 2 % en poids du fourrage de confiserie aéré à base d'eau, éventuellement d'au moins 2 % en poids, d'au moins 2,2 % en poids, d'au moins 3 % en poids ou d'au moins 3,3 % en poids.

5. Composition de confiserie selon l'une quelconque des revendications précédentes, dans laquelle, dans le fourrage de confiserie aéré à base d'eau, le sucre comprend ou est constitué :
d'un sucre inverti ayant un pourcentage de conversion de sucre compris entre 10 % et 70 %, entre 10 % et 65 %, entre 20 % et 60 %, ou entre 40 % et 60 %.

6. Composition de confiserie selon l'une quelconque des revendications précédentes, dans laquelle, dans le fourrage de confiserie aéré à base d'eau, de 20 % en poids à 65 % en poids du sucre est du glucose et/ou du dextrose.

7. Composition de confiserie selon l'une quelconque des revendications précédentes, dans laquelle de 10 % en poids à 50 % en poids du sucre est du fructose.

8. Composition de confiserie selon l'une quelconque des revendications précédentes, comprenant du sucre à une teneur comprise entre 40 % en poids et 90 % en poids.

9. Composition de confiserie selon l'une quelconque des revendications précédentes, dans laquelle l'activité de l'eau du fourrage de confiserie aéré à base d'eau est supérieure à 0,45 et non supérieure à 0,64 ou non supérieure à 0,59.

10. Composition de confiserie selon l'une quelconque des revendications précédentes, dans laquelle le fourrage de confiserie aéré à base d'eau a un foisonnement de 60 % à 200 %, plus préférablement de 60 % à 160 %.

11. Composition de confiserie selon l'une quelconque des revendications précédentes, dans laquelle le fourrage de confiserie aéré à base d'eau est aéré jusqu'à une masse volumique apparente inférieure à 0,8 g/cm³.

12. Composition de confiserie selon l'une quelconque des revendications précédentes, dans laquelle le fourrage de confiserie aéré à base d'eau est sensiblement ou complètement dépourvu de 1, 2, 3, 4, 5, 6, 7 ou 8 parmi ce qui suit :
matière grasse ;
hydrocolloïdes ;
agents tensioactifs ;
émulsifiants ;
fibres alimentaires ;
agents gélifiants ;
épaississants ; et
produits dérivés d'œufs.

13. Procédé de fabrication d'une composition de confiserie comprenant un fourrage de confiserie aéré à base d'eau avec un chocolat ou un analogue de chocolat selon les revendications 1 à 12, comprenant les étapes consistant à :
(i) Fournir une solution aqueuse de sucre ;
(ii) Ajouter de la protéine à la solution aqueuse et fournir une solution ayant un pH supérieur ou égal à 5,6 ;
(iii) Chauffer le mélange à au moins 50 °C, de préférence à au moins 60 °C, plus préférablement entre 70 °C et 95 °C, pour dénaturer la protéine ;
(iv) Refroidir le mélange ;
(v) Aérer le mélange refroidi pour obtenir un fourrage de confiserie aéré à base d'eau ;
(vi) Déposer la confiserie aérée à base d'eau dans une coque en chocolat ou en analogue de chocolat.

14. Procédé selon la revendication 13, dans lequel l'étape (iii) produit une solution avec un degré Brix compris entre 76 et 81 Brix.
